# EUROPÄISCHE PATENTSCHRIFT

(11) **EP 3 161 400 B1**
(45) Veröffentlichungstag und Bekanntmachung des Hinweises auf die Patenterteilung: **30.10.2019**
(21) Anmeldenummer: 15728007.4
(22) Anmeldetag: 11.06.2015
(51) Int. Cl.: F27B 7/20, F27D 17/00, C04B 7/43, C04B 7/47

(54) **VERFAHREN ZUR ABWÄRMENUTZUNG IN EINER ANLAGE ZUR ZEMENTHERSTELLUNG UND ANLAGE ZUR ZEMENTHERSTELLUNG**
METHOD FOR USING WASTE HEAT IN A PLANT FOR PRODUCING CEMENT AND PLANT FOR PRODUCING CEMENT
PROCÉDÉ D'UTILISATION DE LA CHALEUR PERDUE PAR UNE INSTALLATION DE PRODUCTION DE CIMENT ET INSTALLATION DE PRODUCTION DE CIMENT

(30) Priorität: 27.06.2014 DE 102014010044
(43) Veröffentlichungstag der Anmeldung: 03.05.2017
(73) Patentinhaber: KHD Humboldt Wedag GmbH, 51067 Köln (DE)
(72) Erfinder: SCHÜRMANN, Heiko, 51373 Leverkusen (DE)
(86) Internationale Anmeldenummer: PCT/EP2015/063086
(87) Internationale Veröffentlichungsnummer: WO 2015/197372

(56) Entgegenhaltungen:
- CN-A- 101 013 002
- DE-A1-102012 020 300

## Beschreibung

Die Erfindung betrifft ein Verfahren zur Nutzung der Abwärme einer Anlage zur Herstellung von Zement, wobei die Anlage zur Herstellung von Zement mindestens einen aus einer Abfolge von Zyklonen bestehenden Wärmetauscher zum Erhitzen von Rohmehl, mindestens einen Calcinator zur Entsäuerung des Rohmehls, mindestens einen Drehrohrofen zum Sintern des entsäuerten Rohmehls zu Zementklinker mit einer Drehofeneinlaufkammer, mindestens einen Klinkerkühler zur Kühlung des Zementklinkers und mindestens eine Tertiärluftleitung zur Ableitung aufgewärmter Kühlerluft (Tertiärluft) vom Klinkerkühler in den mindestens einen Calcinator aufweist, und wobei Prozessgas an einer Prozessgasentnahmestelle am Austritt des Calcinators und / oder an einer Prozessgasentnahmestelle am gasseitigen Austritt des in Gasströmungsrichtung ersten Zyklons im Wärmetauscher und / oder an einer Prozessgasentnahmestelle an der Drehofeneinlaufkammer entnommen wird, einem ersten Dampfkessel, dem Bypass Boiler, zum Wärmetausch und zur Erhitzung von Wasserdampf zum Zwecke einer nachfolgenden Umwandlung von Wärme in elektrische Energie zugeführt wird und dann in den in Gasströmungsrichtung zweiten oder dritten Zyklon des Wärmetauschers zurückgeführt wird; die Erfindung betrifft ferner eine korrespondierende Anlage zur Herstellung von Zement, aufweisend mindestens einen aus einer Abfolge von Zyklonen bestehenden Wärmetauscher zum Erhitzen von Rohmehl, mindestens einen Calcinator zur Entsäuerung des Rohmehls, mindestens einen Drehrohrofen zum Sintern des entsäuerten Rohmehls zu Zementklinker mit einer Drehofeneinlaufkammer, mindestens einen Klinkerkühler zur Kühlung des Zementklinkers und mindestens eine Tertiärluftleitung zur Ableitung aufgewärmter Kühlerluft (Tertiärluft) vom Klinkerkühler in den mindestens einen Calcinator, eine Prozessgasentnahmestelle am Austritt des Calcinators und / oder eine Prozessgasentnahmestelle am gasseitigen Austritt des in Gasströmungsrichtung ersten Zyklons im Wärmetauscher und / oder eine Prozessgasentnahmestelle an der Drehofeneinlaufkammer, wobei die Prozessgasentnahmestelle durch eine erste Prozessgasleitung mit einem ersten Dampfkessel, dem Bypass Boiler, zum Wärmetausch und zur Erhitzung von Wasserdampf zum Zwecke einer nachfolgenden Umwandlung von Wärme in elektrische Energie verbunden ist, und eine Prozessgasrückführungsstelle in Gasströmungsrichtung direkt vor dem zweiten oder dritten Zyklon des Wärmetauschers, wobei der Bypass Boiler mit der Prozessgasrückführungsstelle durch eine zweite Prozessgasleitung verbunden ist.

Im Prozess der Zementherstellung kommt es zum Einsatz großer Wärmemengen. Insbesondere wird entsäuertes Zementrohmehl in Drehrohröfen bei hohen Temperaturen zu Zementklinker gesintert. Die hierbei anfallende Abwärme kann teils zur Rekuperation, also zur Rückführung in den Prozess verwendet werden. Darüber hinaus entsteht Abwärme, insbesondere von Wärmequellen mit vergleichsweise geringen Temperaturen, die nicht für die Rekuperation geeignet sind. Die Bestrebung liegt daher nahe, die nicht für Rekuperation oder andere Prozessschritte, wie bspw. das Trocknen von Rohmaterialien, eingesetzte Abwärme zu nutzen, indem sie in elektrische Energie umgewandelt wird.

In Anlagen zur Zementherstellung sind zunächst insbesondere zwei Dampfkesselsysteme zu einer entsprechenden Nutzung von Abwärme bekannt. Ein erstes System besteht aus einem Dampfkessel, der dem von aufeinanderfolgenden Zyklonen gebildeten Wärmetauscher (Zyklon-Wärmetauscher) zum Erhitzen des Rohmehls nachgeschaltet ist und als Suspension Preheater Boiler, kurz SP-Boiler, bezeichnet wird. Ein zweites System besteht aus einem Dampfkessel, der im Abluftweg des Klinkerkühlers, betreffend die nicht zur Rekuperation geeignete, im Endkühlungsbereich des Klinkerkühlers anfallende Abluft, angeordnet ist und als Air Quenched Clinkercooler Boiler, kurz AQC-Boiler, bezeichnet wird. Beiden Systemen ist gemein, dass die heißen Abgase den jeweiligen Dampfkessel durchströmen, in dem mehrere Wärmetauscher zum Erhitzen von Wasser, zum Verdampfen des Wassers und zum Erhitzen bzw. zum über die Verdampfungstemperatur noch hinausgehenden Überhitzen des Wasserdampfes angeordnet sind. Der erhitzte bzw. überhitzte Dampf wird dann einer Turbine zugeführt, in die der Dampf wieder entspannt wird. Hierdurch wird mechanische Arbeit abgegeben, die von einem Generator in elektrische Energie umgewandelt werden kann. Problematisch ist jedoch, dass es sich in beiden Fällen nur um relativ geringe Temperaturen des Abgases bzw. der Abluft handelt, mit denen die aus dem Zementherstellungsprozess auskoppelbare Wärme zur Verfügung steht, woraus zusätzlich ein vergleichsweise geringer (von den Kesselwasserpumpen erzeugter) Druck resultiert. Die Erzeugung höherer Drücke würde mit höheren Verdampfungstemperaturen korrespondieren, bei denen das Wasser teilweise oder gar nicht verdampfen würde und somit die Turbine nicht zu betreiben wäre. Aufgrund dieser thermodynamischen Dampfparameter liefert die niederkalorische Abwärme nur einen geringen Wirkungsgrad für die Umwandlung von thermischer in mechanische und damit in elektrische Energie.

Um den Wirkungsgrad zu verbessern, um also eine möglichst hohe Energieauskopplung zur Umwandlung von Abwärme aus einem Zementwerk in elektrische Energie zu erreichen, müssen Abwärmequellen erschlossen werden, die eine - wesentlich höhere Temperatur zur Verfügung stellen, als dies von den oben dargestellten Systemen in Zementanlagen bekannt ist. In der Druckschrift DE102012020300A1 wird ein Verfahren zur Nutzung der Abwärme einer Anlage zur Herstellung von Zement mit einer solchen Hochtemperaturabwärmequelle offenbart, bei der höhere Dampfparameter für die Umwandlung der Abwärme in elektrische Energie gegeben sind. Diesem Verfahren gemäß wird Prozessgas am Austritt des Calcinators und / oder am gasseitigen Austritt des im Wärmetauscher in Gasströmungsrichtung ersten Zyklons entnommen und einem Dampfkessel, dem sogenannten Bypass Boiler, zur Erhitzung bzw. Überhitzung von Wasserdampf zum Zwecke einer nachfolgenden Umwandlung der thermischen in elektrische Energie zugeführt. Das Prozessgas besitzt an den genannten Entnahmestellen nicht nur eine besonders hohe Temperatur. Vielmehr wird in der DE102012020300A1 auch offenbart, dass an diesen Entnahmestellen im Gegensatz zu anderen Stellen in der Anlage die Entnahme von heißem Prozessgas das Verfahren zur Herstellung von Zement nur wenig beeinflusst.

Darüber hinaus wird in der Druckschrift DE3341695A1 eine dritte geeignete Entnahmestelle für das heiße Prozessgas zum Zwecke der Dampferzeugung und anschließenden Gewinnung elektrischer Energie offenbart, nämlich im Bereich zwischen der Sinterstufe und der Calcinierungsstufe.

In der Druckschrift CN 101 013 002 A wird eine Anlage zur Herstellung von Zementklinker ohne Vorsehen eines Bypass Boilers gelehrt, bei der heiße Tertiärluft zur Wärmeauskopplung aus dem Prozess genutzt wird.

Ferner erweist es sich, wie in DE102012020300A1 ausgeführt wird, als vorteilhaft, das durch den Bypass Boiler geführte, abgekühlte Prozessgas in den in Gasströmungsrichtung zweiten oder dritten Zyklon des Zyklon-Wärmetauschers zurückzuführen. Obwohl auf diese Weise bereits ein große Auskopplung von Wärme aus der Anlage zur Zementherstellung für die Umwandlung in elektrische Energie gelingt, muss es aus wirtschaftlichen und ökologischen Gründen das Bestreben sein, ausgehend von dieser Basis eine noch größere Auskopplung von Wärme zur Erlangung eines noch höheren Wirkungsgrades bei der Umwandlung in elektrische Energie zu erzielen.

Aufgabe der Erfindung ist es daher, ein Verfahren zur Nutzung der Abwärme einer Anlage zur Herstellung von Zement, aufweisend einen Bypass Boiler, anzugeben, bei der eine sehr große Auskopplung von Wärme zur Erzeugung elektrischer Energie stattfindet; ferner gehört es zur Aufgabe der Erfindung, eine zu diesem Verfahren korrespondierende Anlage zur Herstellung von Zement vorzuschlagen.

Die erfindungsgemäße Aufgabe wird durch ein Verfahren zur Nutzung der Abwärme einer Anlage zur Herstellung von Zement mit den Merkmalen des Anspruchs 1 und durch eine Anlage zur Herstellung von Zement mit den Merkmalen des Anspruchs 4 gelöst. Weitere vorteilhafte Ausgestaltungen sind in den Unteransprüchen zu Anspruch 1 und in dem Unteranspruch zu Anspruch 4 angegeben.

Nach der Erfindung ist also vorgesehen, über die Prozessgasentnahme am Austritt des Calcinators und / oder am gasseitigen Austritt des in Gasströmungsrichtung ersten Zyklons des Wärmetauschers und / oder an der Drehofeneinlaufkammer hinaus eine weitere Hochtemperaturabwärmequelle im Verfahren vorzusehen und die diesbezügliche Wärmegewinnung im Verfahren der Abwärmenutzung mit der Wärmegewinnung aus der ersten Hochtemperaturabwärmequelle vorteilhaft zu verschränken. Den genannten und an sich bekannten drei Prozessgasentnahmestellen der ersten Hochtemperaturabwärmequelle ist gemein, dass es sich hier um die Entnahme der Abgase aus der Sinterstufe handelt, die in hohen Temperaturen vorliegen. Aus welchen der drei Prozessgasentnahmestellen zu welchen relativen Anteilen Prozessgas entnommen wird, wird der Fachmann für den Betrieb einer konkreten Anlage festlegen. Wenngleich die Unterschiede nicht entscheidend groß sind, da es sich jeweils um das Abgas der Sinterstufe handelt, spricht beispielsweise für einen bevorzugten Entnahmeanteil an der Drehofeneinlaufkammer, dass hier die vergleichsweise höchsten Gastemperaturen und (zumindest im oberen Bereich der Drehofeneinlaufkammer) ein geringer Staubanteil im Gas vorliegen. Hinsichtlich der erfindungsgemäßen weiteren Hochtemperaturabwärmequelle ist zu beachten, dass die heiße Tertiärluft, die gemäß dem bekannten Vorgehen aus dem Klinkerkühler entnommen und durch die Tertiärluftleitung zum Calcinator geführt wird, Temperaturen von typischerweise 700°C und häufig noch höhere Temperaturen besitzt. Sie kommt also grundsätzlich als eine Hochtemperaturabwärmequelle in Betracht. Versuche und Messungen haben ergeben, dass eine teilweise Abzweigung der Tertiärluft für einen Wärmeentzug aus der Tertiärluft zur Energieauskopplung den Prozessverlauf der Zementherstellung kaum beeinträchtigt. Die Führung eines restlichen Anteils an Tertiärluft mit ihrer Wärme zum Calcinator ist ausreichend für die Prozessschritte während der Calcinierungsstufe. Es wird daher vorgeschlagen, an einer in der Tertiärluftleitung vorgesehenen Tertiärluftentnahmestelle Tertiärluft zu entnehmen und durch eine Tertiärluft-Gasleitung einem weiteren, in der Anlage vorzusehenden Dampfkessel, dem Tertiärluftboiler, zum Wärmetausch zuzuführen. Hier kommt es zu einer Erhitzung und dabei letztlich zu einer Überhitzung von Wasserdampf. Mit einer Dampfleitung wird nun der so erhitzte Wasserdampf dem Bypass Boiler zugeführt, wo er aufgrund der dort herrschenden, noch höheren Temperaturen auf ein noch höheres Temperaturniveau überhitzt wird. Aufgrund der solchermaßen aus der hochkalorischen Tertiärluftwärme in den Bypass Boiler zusätzlich eingetragenen Wärme wird somit aus der erfindungsgemäßen Anlage im erfindungsgemäßen Verfahren eine höhere Wärmemenge ausgekoppelt, als es in der eingangs beschriebenen Anlage mit Bypass Boiler (aber ohne Tertiärluftboiler) der Fall ist. Aufgrund der wegen der hohen Tertiärlufttemperaturen weiterhin hohen Dampfparameter im Bypass Boiler ist ein hoher Wirkungsgrad für die Wärmeumwandlung in mechanische und elektrische Energie mittels nachgeschalteter Turbine und Generator gewährleistet und damit eine besonders hohe Ausbeute an elektrischer Energie gegeben.

Die Nutzung der Gesamtabwärme der Anlage zur Herstellung von Zement kann noch verbessert werden, wenn man das oben beschriebene Verfahren (und die damit korrespondierende Anlage) mit den bereits üblicherweise eingesetzten Dampfkesselsystemen, SP-Boiler und AQC-Boiler, verbindet und mindestens einen, bevorzugt beide, Dampfkesselsysteme dem Bypass Boiler bzw. dem Tertiärluftboiler vorschaltet. Die Erfindung sieht daher vor, das heiße Abgas des Zyklon-Wärmetauschers aus der obersten, in Gasströmungsrichtung letzten Stufe des Wärmetauschers zu entnehmen und einem Dampfkessel, dem SP-Boiler, zur Verdampfung von Wasser und Erhitzung bzw. Überhitzung von Wasserdampf zuzuführen. Der Wasserdampf aus dem SP-Boiler, der aufgrund der niederkalorischen Abwärme aus dem entnommenen Abgas geringe und damit hinsichtlich der Effizienz bei einer sich etwaig unmittelbar anschließenden Umwandlung in elektrische Energie nur schlecht geeignete Temperaturen hat, wird nun dem Tertiärluftboiler zur Aufheizung mit der Wärme aus dem dortigen heißen Prozessgas zugeführt. Je nach Temperaturverteilung in der gesamten Anlage wird der Fachmann ggf. auch für einen möglichst hohen Wirkungsgrad entscheiden können, den Wasserdampf aus dem SP-Boiler auch direkt dem Bypass Boiler zur Erhitzung auf ein höheres Temperaturniveau zuzuführen.

Für eine weitere Nutzung von Niedertemperaturwärmequellen, d.h. zunächst auch niederkalorischer Abwärme aus der Anlage zur Zementherstellung, sieht die Erfindung vor, heiße Abluft aus der in Materialstromrichtung (Klinker) am Ende des Klinkerkühlers befindlichen Zone zu entnehmen und zum Wärmetausch einem Dampfkessel, dem AQC-Boiler, zur Verdampfung von Wasser und Erhitzung bzw. Überhitzung von Wasserdampf zuzuführen. Ähnlich wie beim oben beschriebenen Verfahren beim Einsatz eines SP-Boilers wird hier der im AQC-Boiler erhitzte, jedoch aufgrund geringer Temperaturen niederkalorische Wasserdampf durch eine Dampfleitung dem Tertiärluftboiler (oder ggf. direkt dem Bypass Boiler) zugeführt. Der kältere Dampf wird hier durch das heiße Prozessgas weiter aufgeheizt und kann so mit günstigeren thermodynamischen Parametern seine Wärme in den anschließenden Prozess der Umwandlung in mechanische bzw. elektrische Energie eintragen, womit die Energieauskopplung aus der Anlage bzw. der Nutzungsgrad der Abwärme der Anlage steigen.

Für eine volle Ausprägungsform des Verfahrens zur Nutzung der Abwärme einer Anlage zur Herstellung von Zement (und der korrespondierenden Zementherstellungsanlage) ist erfindungsgemäß vorgesehen, in dem erfindungsgemäßen Verfahren bzw. in der Anlage sowohl ein Kesselsystem mit einem SP-Boiler als auch ein Kesselsystem mit einem AQC-Boiler anzuordnen. Dabei werden der erhitzte, jedoch niederkalorische Wasserdampf aus dem SP-Boiler und der erhitzte, jedoch niederkalorische Wasserdampf aus dem AQC-Boiler zur weiteren Erhitzung bzw. Überhitzung in den Tertiärluftboiler geführt, und je nach den in der Anlage an den jeweiligen Stellen vorherrschenden Temperaturen und Gasmengen wird der Fachmann vorteilhaft entscheiden, den Wasserdampf aus einem der beiden Kesselsysteme (SP- oder AQC-Boiler) direkt in den Bypass Boiler zu führen.

Erfindungsgemäß ist vorgesehen, die aus der Tertiärluftleitung abgezweigte Tertiärluft nach Durchlauf durch den Tertiärluftboiler wieder in die Tertiärluftleitung zurückzuführen. Die noch enthaltene Wärme zusammen mit dem so gegebenen Wert der Menge der Gesamttertiärluft erweist sich als günstig für die nachfolgende Calcinierungsstufe. Hierzu wird der Tertiärluftboiler durch eine Tertiärluft-Gasleitung mit einer in Gasströmungsrichtung hinter dem Tertiärluftboiler in der Tertiärluftleitung angeordneten Tertiärluftrückführungsstelle verbunden.

Das Prozessgas, das am Austritt des Calcinators und / oder am gasseitigen Austritt des in Gasströmungsrichtung gesehen ersten Zyklons des Zyklon-Wärmetauschers und / oder an der Drehofeneinlaufkammer entnommen und dem Bypass Boiler zugeführt wird, enthält einen Staubanteil, was für den weiteren Prozessweg (Rückführung) nachteilig ist. Eine Ausgestaltung der Erfindung sieht daher vor, mithilfe einer am Bypass Boiler, bspw. eingangs, angeordneten Entstaubungsvorrichtung die Staubanteile aus dem Prozessgas zumindest teilweise abzutrennen und durch regelmäßige Ausleerung bzw. Abreinigung zu entfernen. Da es sich um einen Rohstoff für die Zementproduktion handelt, ist der Staub vorzugsweise dem Prozess der Zementherstellung wieder zuzuführen. Hierzu wird er vorzugsweise über die Drehofeneinlaufkammer in den Drehrohrofen zum Sintern gegeben. Erweisen sich die Staubagglomerate in einer gegebenen Anlage als zu grobkörnig, ist der Staub vor der Rückführung zunächst zur Zerkleinerung in eine Zementmühle zu geben.

Um die zahlreichen Teilprozesse in der Anlage optimal einstellen zu können, sieht eine Ausgestaltung der Erfindung eine Regelung sowohl der Menge der aus der Tertiärluftleitung entnommenen Tertiärluft als auch der Menge der am Austritt des Calcinators und / oder am gasseitigen Austritt des in Gasströmungsrichtung gesehen ersten Zyklons des Zyklon-Wärmetauschers und / oder an der Drehofeneinlaufkammer entnommenen Prozessgase vor. Hierzu wird einerseits ein erstes Stellorgan, beispielsweise ein Schieber oder eine Klappe, vor, alternativ auch hinter, dem Tertiärluftboiler in der von der Tertiärluftleitung abzweigenden Tertiärluft-Gasleitung angeordnet. Ferner wird ein zweites Stellorgan bzw. Stellglied, bspw. ein als Schieber, Klappe oder Regelventil ausgeführter Gasregler, zwischen dem Bypass Boiler und dem Zyklon-Wärmetauscher angeordnet. In diesem Rückführungsabschnitt ist das Gas nach Durchlauf durch den Bypass Boiler bereits abgekühlt, was für die technische Durchführung der Gasmengenregelung vorteilhaft ist.

Grundsätzlich ist die hier beschriebene Anlage zur Herstellung von Zement (abgesehen von den Verfahrensschritten zur Abwärmeableitung) als beispielhafter und teils vereinfacht beschriebener Grundtypus einer solchen Anlage zu sehen. Abweichungen in Details führen dabei zu keinen prinzipiellen Änderungen im hier vorgeschlagenen Verfahren der Nutzung der Abwärme der Anlage zur Zementherstellung. Anpassungen an variierende Anlageausführungsformen sind vielmehr vom Fachmann naheliegend durchführbar.

Die Erfindung wird anhand der folgenden Figuren näher erläutert. Es zeigt:
- Fig. 1: eine Anlage zur Herstellung von Zement in schematischer Darstellung mit Wärmeschaltbild,
- Fig. 2: eine erfindungsgemäße Anlage zur Herstellung von Zement in schematischer Darstellung mit Wärmeschaltbild im Ausführungsbeispiel mit einem dem Tertiärluftboiler vorgeschaltetem SP-Boiler und einem dem Bypass Boiler vorgeschaltetem AQC-Boiler,
- Fig. 3: eine erfindungsgemäße Anlage zur Herstellung von Zement in schematischer Darstellung mit Wärmeschaltbild im Ausführungsbeispiel mit einem dem Bypass Boiler vorgeschaltetem SP-Boiler und einem dem Tertiärluftboiler vorgeschaltetem AQC-Boiler,
- Fig. 4: eine Anlage zur Herstellung von Zement in schematischer Darstellung mit Wärmeschaltbild im Ausführungsbeispiel mit dem Tertiärluftboiler vorgeschaltetem SP-Boiler und AQC-Boiler.

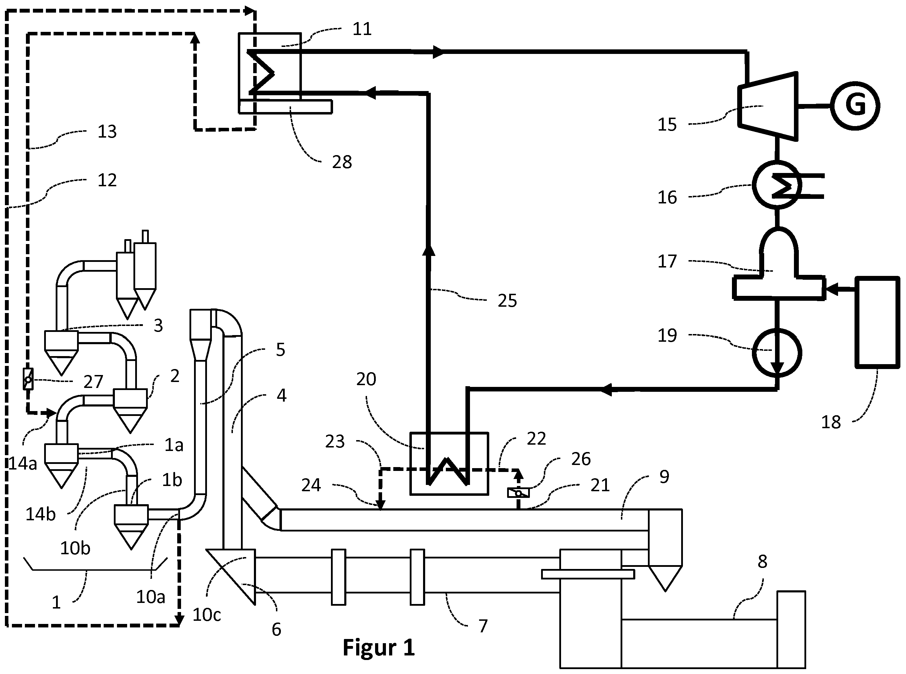

In **Figur 1** sind eine Anlage zur Herstellung von Zement und das mit ihr realisierte Verfahren zur Nutzung der Abwärme der Anlage in schematischer Darstellung mit Wärmeschaltbild skizziert. Die Anlage zur Zementherstellung weist zunächst einen Wärmetauscher 1 auf, der aus einer Abfolge von Zyklonen (im Ausführungsbeispiel 4 Zyklonen) 1a, 1b, 2, 3 besteht. Thermisch zu behandelndes Rohmehl fließt von oben durch die Zyklone 1a, 2, 3 bis zum (von unten) zweiten Zyklon 1a und wird von dort in den aufsteigenden (im Bild rechten) Ast des Calcinators 4 geführt (nicht dargestellt) und dort entsäuert. Von dem dortigen, von unten nach oben gerichteten Prozessgasstrom wird das Rohmehl durch den Calcinator 4 (ggf. durch eine Wirbelkammer) und durch den absteigenden Ast des Calcinators 5 als calciniertes Rohmehl in den untersten (in Gasströmungsrichtung ersten) Zyklon 1b des Wärmetauschers 1 geleitet, wo es abgetrennt und über die Drehofeneinlaufkammer 6 in den Drehrohrofen 7 geführt wird. Dort wird es durch die hohen Temperaturen im Drehrohrofen 7 zu Zementklinker gesintert. Das heiße Prozessgas, das im untersten bzw. ersten Zyklon 1b vom calcinierten Rohmehl getrennt wurde, strömt durch die weiteren Zyklone 1a, 2, 3 (in entgegengesetzter Richtung wie das Rohmehl) durch den Wärmetauscher 1 nach oben. Der heiße Klinker fällt nach der Sinterung im Drehrohrofen 7 in den Klinkerkühler 8, wo er insbesondere durch Abgabe von Wärme an Kühlluft sehr schnell abkühlt. Die dadurch erwärmte Kühlerluft wird teils als sogenannte Sekundärluft in den Drehrohrofen 7 geleitet; teils jedoch wird sie als Tertiärluft durch eine Tertiärluftleitung zur Beförderung des Calcinierungsvorganges in den aufsteigenden Ast des Calcinators 4 geleitet.

Für die Auskopplung von Wärme zur Umwandlung in elektrische Energie ist ferner eine erste Hochtemperaturabwärmequelle vorgesehen. Hierbei wird im dargestellten Ausführungsbeispiel an der Prozessgasentnahmestelle 10a am Austritt des Cacinators 5 sehr heißes Prozessgas entnommen. Als alternative oder zusätzliche Möglichkeit könnte das Prozessgas auch durch eine Prozessgasentnahmestelle 10b am gasseitigen Austritt des ersten Zyklons 1b und als dritte alternative oder zusätzliche Möglichkeit auch an der Prozessgasentnahmestelle 10c aus der Drehofeneinlaufkammer 6 entnommen werden. (Die möglichen Prozessgasentnahmestellen 10b und 10c sind in der Abbildung mit Bezugszeichen markiert.) Die Prozessgasentnahmestelle 10a, 10b, 10c ist mit einem Dampfkessel, dem Bypass Boiler 11 durch eine Prozessgasleitung 12 verbunden. Die hochkalorige Wärme des sehr heißen Prozessgases führt im Bypass Boiler 11 zu Erwärmung und Verdampfung von Wasser sowie zu Erhitzung, einschließlich Überhitzung des Wasserdampfs. Das abgekühlte Prozessgas wird anschließend zum Wärmetauscher 1 durch eine weitere Prozessgasleitung 13 zurückgeführt und an einer Prozessgasrückführungsstelle 14a direkt vor dem in Gasströmungsrichtung dritten Zyklon 2 oder alternativ an einer Prozessgasrückführungsstelle 14b direkt vor dem in Gasströmungsrichtung zweiten Zyklon 1a in den Wärmetauscher 1 eingegeben. Der sehr heiße Dampf aus dem Bypass Boiler wird zum Zwecke der Umwandlung seiner thermischen Energie in mechanische Arbeit in eine Turbine 15 entspannt, wobei die mechanische Arbeit von einem anschließenden Generator G in elektrische Energie umgewandelt wird. Der Dampf wird zur Kondensation in einen Kondensator 16 geführt, und zur Entfernung gelöster Gase wird das so gegebene flüssige Wasser in einen Deaerator (Entgaser) 17 geleitet, wo typischerweise auch eine Anlage 18 zur chemischen Aufbereitung des Wassers zum Einsatz kommt. Mittels einer Pumpe 19 wird das Wasser wieder in den Abwärmenutzungskreislauf zurückgepumpt.

Es ist nun vorgesehen, dass dem Bypass Boiler 11 ein weiterer Dampfkessel, der Tertiärluftboiler 20, vorgeschaltet ist. Zur Nutzbarmachung einer zweiten Hochtemperaturabwärmequelle wird ein Anteil heißer Tertiärluft aus der Tertiärluftleitung 9 an der Tertiärluftentnahmestelle 21 abgezweigt und in einer Tertiärluft-Gasleitung 22 für einen Wärmetausch zum Tertiärluftboiler 20 geführt. Die hochkalorige Wärme führt hier zu einer Verdampfung des Wassers und Überhitzung des Wasserdampfes. In **Figur 1** ist dabei der gewöhnliche Fall dargestellt, bei dem die abgekühlte Tertiärluft nach dem Durchgang durch den Tertiärluftboiler 20 durch eine weitere Tertiärluft-Gasleitung 23 an der Tertiärluftrückführungsstelle 24 in Gasströmungsrichtung hinter dem Tertiärluftboiler 20 in die Tertiärluftleitung 9 zurückgeführt wird, von wo sie in den Calcinator 5 geleitet wird. Dem erfindungsgemäßen Vorschlag entsprechend wird der heiße Wasserdampf aus dem Tertiärluftboiler 20 durch eine Dampfleitung 25 in den Bypass Boiler 11 geleitet. Durch den damit gegebenen Wärmeeintrag und die weitere Erhitzung bzw. Überhitzung des Dampfes im Bypass Boiler 11 erfolgt eine sehr hohe Auskopplung von Wärme zur anschließenden Umwandlung in elektrische Energie.

In der dargestellten Anlage sind ein Stellorgan 26 sowie ein Stellorgan 27 (z.B. Schieber oder Klappen) abgebildet, die als Teil von Regelvorrichtungen die Menge der aus der Tertiärluftleitung 9 entnommenen Tertiärluft sowie die Menge der an der Prozessgasentnahmestelle 10a (und / oder 10b und / oder 10c) entnommenen Tertiärluft regeln. Damit kann die Durchführung des Verfahrens vom Fachmann in effizienter Weise auf die konkreten Bedingungen der Anlage angepasst werden. Darüber hinaus verfügt der Bypass Boiler über eine Entstaubungsvorrichtung 28, mit der Staubanteile aus dem Prozessgas entfernt und anschließend (hier nicht eingezeichnet) in den Drehrohrofen 7 über die Drehofeneinlaufkammer 6 zurückgeführt oder zur Zerkleinerung zunächst in eine Zementmühle gegeben werden können.

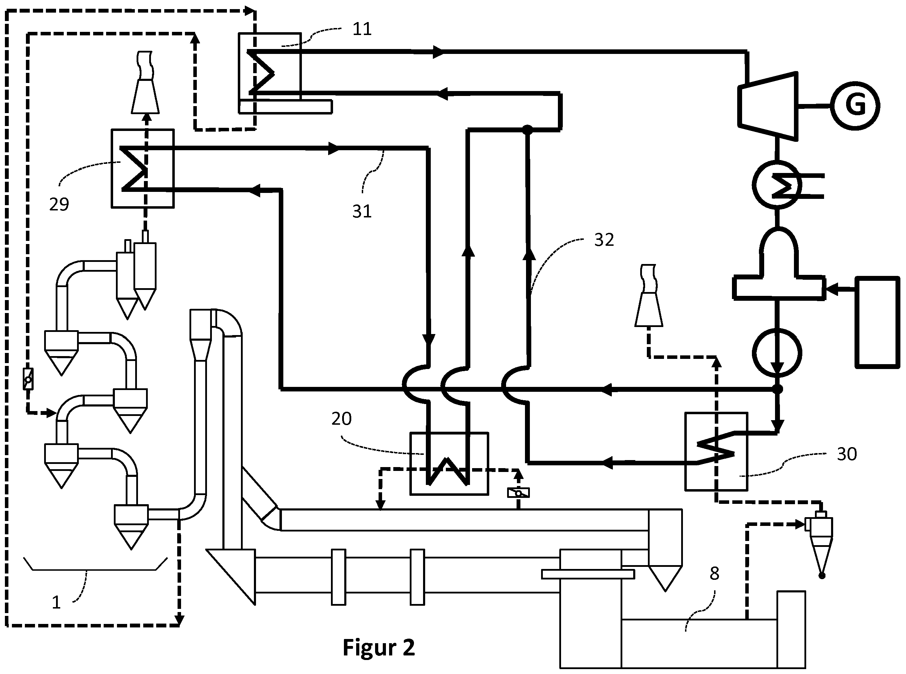

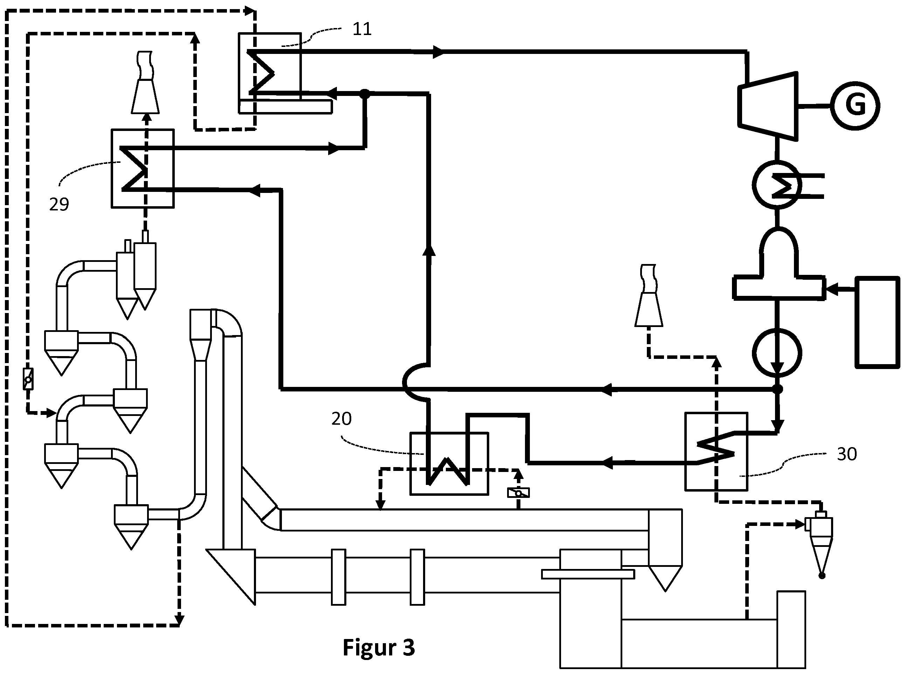

**Figur 2** und **Figur 3** stellen Ausführungsbeispiele der erfindungsgemäßen Anlage zur Zementherstellung und des Verfahrens zur Nutzung der Abwärme dieser Anlage dar, in denen zwei zusätzliche, an sich bekannte Kesselsysteme zur Nutzung von Niedertemperaturabwärmequellen in die Anlage und den Prozessablauf integriert sind: SP-Boiler 29 und AQC-Boiler 30. Durch Vorschaltung vor die mit Hochtemperaturabwärmequellen verbundenen Tertiärluftboiler 20 und Bypass Boiler 11 kann auch der relativ kühle Wasserdampf des SP-Boilers 29 sowie des AQC-Boilers 30 effizient zur Wärmeauskopplung aus der Anlage genutzt werden.

**Figur 2** stellt das Ausführungsbeispiel einer erfindungsgemäßen Anlage zur Herstellung von Zement in schematischer Darstellung mit Wärmeschaltbild dar, bei welchem dem Tertiärluftboiler 20 ein SP-Boiler 29 und dem Bypass Boiler 11 direkt ein AQC-Boiler 30 vorgeschaltet ist. Hierzu wird aus der obersten Stufe des Wärmetauschers 1 das heiße Abgas entnommen und zum Wärmetausch und zur Erhitzung von Wasserdampf dem SP-Boiler 29 zugeführt. Anschließend verlässt es das System. Der heiße (jedoch dennoch vergleichsweise kühle) Wasserdampf wird im Ausführungsbeispiel vom SP-Boiler 29 durch eine Dampfleitung 31 zur weiteren Erhitzung bzw. Überhitzung dem Tertiärluftboiler 20 zugeführt. Darüber hinaus ist dem Klinkerkühler 8 ein AQC-Boiler 30 nachgeschaltet, in den zum Wärmetausch und zur Erhitzung von Wasserdampf Abluft entnommen wird, die im (in Materialstromrichtung gesehen) hinteren Bereich des Klinkerkühlers 8 abgeführt (und anschließend ggf. von Staubanteilen getrennt) wird. Anschließend verlässt sie das System. Der heiße (jedoch dennoch vergleichsweise kühle) Wasserdampf wird im Ausführungsbeispiel zur weiteren Erhitzung bzw. Überhitzung durch eine Dampfleitung 32 zum Bypass Boiler 11 geleitet.

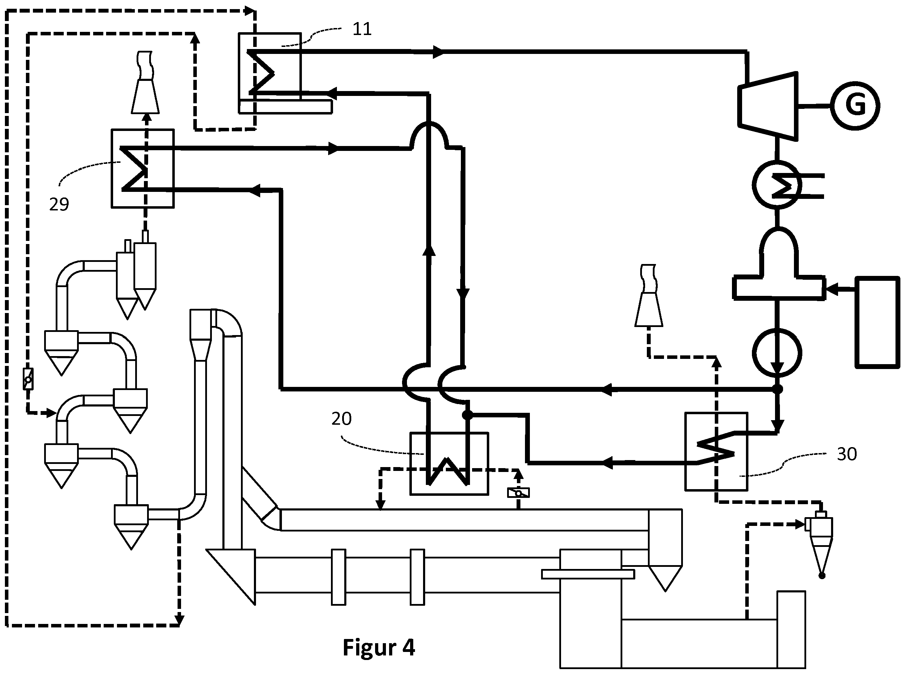

In **Figur 3** wird bei ansonsten gleicher Anordnung ein Ausführungsbeispiel dargestellt, bei dem in der erfindungsgemäßen Anlage der SP-Boiler 29 direkt dem Bypass Boiler 11 und der AQC-Boiler 30 dem Tertiärluftboiler 20 vorgeschaltet ist. Das Prinzip der Wärmeauskopplung bleibt dabei gleich. In **Figur 4** wird bei ansonsten gleicher Anordnung eine Anlage dargestellt, bei der sowohl vom SP-Boiler 29 als auch vom AQC-Boiler 30 der Wasserdampf zunächst in den Tertiärluftboiler 20 geleitet wird, der auch hier dem Bypass Boiler 11 vorgeschaltet ist.

**BEZUGSZEICHENLISTE**

| | | | |
|---|---|---|---|
| 1 | Wärmetauscher | 14a | Prozessgasrückführungsstelle (1. Alternative) |
| 1a | Zyklon | 14b | Prozessgasrückführungsstelle (2. Alternative) |
| 1b | Zyklon | 15 | Turbine |
| 2 | Zyklon | 16 | Kondensator |
| 3 | Zyklon | 17 | Deaerator |
| 4 | Calcinator (aufsteigender Ast) | 18 | Wasseraufbereitungsanlage |
| 5 | Calcinator (absteigender Ast) | 19 | Pumpe |
| 6 | Drehofeneinlaufkammer | 20 | Tertiärluftboiler |
| 7 | Drehrohrofen | 21 | Tertiärluftentnahmestelle |
| 8 | Klinkerkühler | 22 | Tertiärluft-Gasleitung |
| 9 | Tertiärluftleitung | 23 | Tertiärluft-Gasleitung |
| 10a | Prozessgasentnahmestelle (1. Alternative) | 24 | Tertiärluftrückführungsstelle |
| 10b | Prozessgasentnahmestelle (2. Alternative) | 25 | Dampfleitung |
| 10c | Prozessgasentnahmestelle (3. Alternative) | 26 | Stellorgan |
| 11 | Bypass Boiler | 27 | Stellorgan |
| 12 | Prozessgasleitung | 28 | Entstaubungsvorrichtung |
| 13 | Prozessgasleitung | 29 | SP-Boiler |
| | | 30 | AQC-Boiler |
| 31 | Dampfleitung | G | Generator |
| 32 | Dampfleitung | | |

## Patentansprüche

1. Verfahren zur Nutzung der Abwärme einer Anlage zur Herstellung von Zement,
- wobei die Anlage zur Herstellung von Zement mindestens einen aus einer Abfolge von Zyklonen (1a, 1b, 2, 3) bestehenden Wärmetauscher (1) zum Erhitzen von Rohmehl, mindestens einen Calcinator (4, 5) zur Entsäuerung des Rohmehls, mindestens einen Drehrohrofen (7) zum Sintern des entsäuerten Rohmehls zu Zementklinker mit einer Drehofeneinlaufkammer (6), mindestens einen Klinkerkühler (8) zur Kühlung des Zementklinkers und mindestens eine Tertiärluftleitung (9) zur Ableitung aufgewärmter Kühlerluft (Tertiärluft) vom Klinkerkühler (8) in den mindestens einen Calcinator (4) aufweist, und
- wobei Prozessgas
an einer Prozessgasentnahmestelle (10a) am Austritt des Calcinators (5) und / oder an einer Prozessgasentnahmestelle (10b) am gasseitigen Austritt des in Gasströmungsrichtung ersten Zyklons (1b) im Wärmetauscher (1) und / oder an einer Prozessgasentnahmestelle (10c) an der Drehofeneinlaufkammer (6) entnommen wird,
einem ersten Dampfkessel, dem Bypass Boiler (11), zum Wärmetausch und zur Erhitzung von Wasserdampf zum Zwecke einer nachfolgenden Umwandlung von Wärme in elektrische Energie zugeführt wird, und
dann in den in Gasströmungsrichtung zweiten oder dritten Zyklon (1a, 2) des Wärmetauschers (1) zurückgeführt wird,
**gekennzeichnet durch**
- Entnehmen heißer Tertiärluft aus der Tertiärluftleitung (9) und Zuführen der Tertiärluft in einen zweiten Dampfkessel, den Tertiärluftboiler (20), zum Wärmetausch und zur Erhitzung von Wasserdampf,
- Zuführen des erhitzten Wasserdampfes aus dem Tertiärluftboiler (20) zum Bypass Boiler (11) zur weiteren Erhitzung,
- Rückführen des Anteils an Tertiärluft, der den Tertiärluftboiler (20) durchlaufen hat, in die Tertiärluftleitung (9) an einer Tertiärluftrückführungsstelle (24) zwischen Tertiärluftboiler (20) und Calcinator (4, 5),
- Führen des heißen Abgases aus dem Zyklon-Wärmetauscher (1) durch einen dem Zyklon-Wärmetauscher (1) in Gasströmungsrichtung nachgeschalteten Dampfkessel, den Suspension Preheater Boiler (SP-Boiler) (29), zum Wärmetausch und zur Erhitzung von Wasserdampf,
- Führen der heißen Abluft aus der in Materialstromrichtung am Ende befindlichen Zone des Klinkerkühlers (8) durch einen Dampfkessel, den Air Quenched Clinkercooler Boiler (AQC-Boiler) (30), zum Wärmetausch und zur Erhitzung von Wasserdampf, und
- Führen des erhitzten Wasserdampfes aus dem SP-Boiler (29) zur weiteren Erhitzung in den Bypass Boiler (11) und des erhitzten Wasserdampfes aus dem AQC-Boiler (30) zur weiteren Erhitzung in den Tertiärluftboiler (20), oder Führen des erhitzten Wasserdampfes aus dem SP-Boiler (29) in den Tertiärluftboiler (20) und des erhitzten Wasserdampfes aus dem AQC-Boiler (30) in den Bypass Boiler (11).

2. Verfahren nach Anspruch 1,
**gekennzeichnet durch**
Abtrennen und Entfernen von Staubanteilen aus dem Prozessgas im Bypass Boiler (11), wobei der abgetrennte Staub vorzugsweise in eine in Materialstromrichtung eingangs des Drehrohrofens (7) angeordnete Drehofeneinlaufkammer (6) oder in eine Zementmühle zur Zerkleinerung mit anschließender Rückführung in den Prozess der Zementherstellung aufgegeben wird.

3. Verfahren nach einem der Ansprüche 1 oder 2,
**gekennzeichnet durch**
- Regeln der Menge der aus der Tertiärluftleitung (9) entnommenen Tertiärluft durch ein in Gasströmungsrichtung vor dem Tertiärluftboiler (20) angeordnetes Stellorgan (26), und
- Regeln der Menge des an der Prozessgasentnahmestelle (10a) am Austritt des Calcinators (5) und / oder an der Prozessgasentnahmestelle (10b) am gasseitigen Austritt des in Gasströmungsrichtung ersten Zyklons (1b) im Wärmetauscher (1) und / oder an der Prozessgasentnahmestelle (10c) an der Drehofeneinlaufkammer (6) entnommenen Prozessgases, wobei das Stellglied (27) ein Gasregler ist, der zwischen dem Bypass Boiler (11) und dem Wärmetauscher (1) in der den Gasstrom führenden Prozessgasleitung (13) angeordnet ist.

4. Anlage zur Herstellung von Zement,
aufweisend
- mindestens einen aus einer Abfolge von Zyklonen (1a, 1b, 2, 3) bestehenden Wärmetauscher (1) zum Erhitzen von Rohmehl, mindestens einen Calcinator (4, 5) zur Entsäuerung des Rohmehls, mindestens einen Drehrohrofen (7) zum Sintern des entsäuerten Rohmehls zu Zementklinker mit einer Drehofeneinlaufkammer (6), mindestens einen Klinkerkühler (8) zur Kühlung des Zementklinkers und mindestens eine Tertiärluftleitung (9) zur Ableitung aufgewärmter Kühlerluft (Tertiärluft) vom Klinkerkühler (8) in den mindestens einen Calcinator (4),
- eine Prozessgasentnahmestelle (10a) am Austritt des Calcinators (5) und / oder eine Prozessgasentnahmestelle (10b) am gasseitigen Austritt des in Gasströmungsrichtung ersten Zyklons (1b) im Wärmetauscher (1) und / oder eine Prozessgasentnahmestelle (10c) an der Drehofeneinlaufkammer (6), wobei
- die Prozessgasentnahmestelle (10a, 10b, 10c) durch eine erste Prozessgasleitung (12) mit einem ersten Dampfkessel, dem Bypass Boiler (11), zum Wärmetausch und zur Erhitzung von Wasserdampf zum Zwecke einer nachfolgenden Umwandlung von Wärme in elektrische Energie verbunden ist, und
- eine Prozessgasrückführungsstelle (14a, 14b) in Gasströmungsrichtung direkt vor dem zweiten oder dritten Zyklon (1a, 2) des Wärmetauschers (1), wobei
- der Bypass Boiler (11) mit der Prozessgasrückführungsstelle (14a, 14b) durch eine zweite Prozessgasleitung (13) verbunden ist,
**dadurch gekennzeichnet, dass**
- ein zweiter Dampfkessel, der Tertiärluftboiler (20), zum Wärmetausch und zur Erhitzung von Wasserdampf durch aus der Tertiärluftleitung (9) entnommene Tertiärluft vorgesehen ist, wobei
- eine in Gasströmungsrichtung vor dem Tertiärluftboiler (20) in der Tertiärluftleitung (9) angeordnete Tertiärluftentnahmestelle (21) mit dem Tertiärluftboiler (20) durch eine erste Tertiärluft-Gasleitung (22) in Verbindung steht und eine in Gasströmungsrichtung hinter dem Tertiärluftboiler (20) in der Tertiärluftleitung (9) angeordnete Tertiärluftrückführungsstelle (24) mit dem Tertiärluftboiler (20) durch eine zweite Tertiärluft-Gasleitung (23) in Verbindung steht, und dass
- eine Dampfleitung (25) für die Zuführung des erhitzten Wasserdampfes aus dem Tertiärluftboiler (20) hin zum Bypass Boiler (11) zur weiteren Erhitzung vorgesehen ist,
- ein dem Zyklon-Wärmetauscher (1) in Gasströmungsrichtung nachgeschalteter Dampfkessel, der Suspension Preheater Boiler (SP-Boiler) (29), zum Wärmetausch und zur Erhitzung von Wasserdampf durch das heiße Abgas aus dem Zyklon-Wärmetauscher (1) vorgesehen ist, und dass
- ein dem Klinkerkühler nachgeschalteter Dampfkessel, der Air Quenched Clinkercooler Boiler (AQC-Boiler) (30), zum Wärmetausch und zur Erhitzung von Wasserdampf durch die heiße, der in Materialstromrichtung am Ende befindlichen Zone des Klinkerkühlers (8) entnommene Abluft vorgesehen ist, wobei
- der SP-Boiler (29) durch eine Dampfleitung zur Führung des erhitzten Wasserdampfes aus dem SP-Boiler mit dem Bypass Boiler (11) und der AQC-Boiler (30) durch eine Dampfleitung zur Führung des erhitzten Wasserdampfes aus dem AQC-Boiler (30) mit dem Tertiärluftboiler (20) verbunden ist, oder der SP-Boiler (29) durch eine Dampfleitung mit dem Tertiärluftboiler (20) und der AQC-Boiler (30) durch eine Dampfleitung mit dem Bypass Boiler (11) verbunden ist.

5. Anlage nach Anspruch 4,
**dadurch gekennzeichnet, dass**
- eine erste Regelvorrichtung zur Regelung der Menge der aus der Tertiärluftleitung (9) entnommenen Tertiärluft vorhanden ist, wobei das Stellglied ein in Gasströmungsrichtung vor dem Tertiärluftboiler (20) angeordnetes Stellorgan (26) ist, und
- eine zweite Regelvorrichtung zur Regelung der Menge des an der Prozessgasentnahmestelle (10a) am Austritt des Calcinators (5) und / oder an der Prozessgasentnahmestelle (10b) am gasseitigen Austritt des in Gasströmungsrichtung ersten Zyklons (1b) im Wärmetauscher (1) und / oder an der Prozessgasentnahmestelle (10c) an der Drehofeneinlaufkammer (6) entnommenen Prozessgases vorhanden ist, wobei das Stellglied (27) ein Gasregler ist, der zwischen dem Bypass Boiler (11) und dem Wärmetauscher (1) in der den Gasstrom führenden Prozessgasleitung (13) angeordnet ist.

## Claims

1. Method of utilizing the waste heat of a plant for producing cement,
- where the plant for producing cement has at least one heat exchanger (1) consisting of a sequence of cyclones (1a, 1b, 2, 3) for heating raw meal, at least one calciner (4, 5) for deacidifying the raw meal, at least one rotary tube furnace (7) for sintering the deacidified raw meal to form cement clinker having a rotary furnace inlet chamber (6), at least one clinker cooler (8) for cooling the cement clinker and at least one tertiary air conduit (9) for discharging heated cooler air (tertiary air) from the clinker cooler (8) into the at least one calciner (4), and
- where process gas
is taken off at a process gas offtake (10a) at the outlet of the calciner (5) and/or at a process gas offtake (10b) at the gas-side outlet of the first cyclone (1b) in the flow direction of gas in the heat exchanger (1) and/or at a process gas offtake (10c) at the rotary furnace inlet chamber (6),
is fed to a first steam boiler, the bypass boiler (11), for heat exchange and for heating of steam for the purpose of a subsequent conversion of heat into electric energy, and
is then recirculated to the second or third cyclone (1a, 2) in the flow direction of gas of the heat exchanger (1),
**characterized by**
- taking off of hot tertiary air from the tertiary air conduit (9) and introduction of the tertiary air into a second steam boiler, the tertiary air boiler (20), for heat exchange and for heating of steam,
- introduction of the heated steam from the tertiary air boiler (20) into the bypass boiler (11) for further heating,
- recirculation of the proportion of tertiary air which has passed through the tertiary air boiler (20) into the tertiary air conduit (9) at a tertiary air recirculation point (24) between tertiary air boiler (20) and calciner (4, 5),
- conveying of the hot exhaust gas from the cyclone heat exchanger (1) through a steam boiler, the suspension preheater boiler (SP boiler) (29), located downstream of the cyclone heat exchanger (1) in the flow direction of gas, for heat exchange and for heating of steam,
- conveying of the hot exhaust air from the zone located at the end, in the flow direction of material, of the clinker cooler (8) through a steam boiler, the air quenched clinker cooler boiler (AQC boiler) (30), for heat exchange and for heating of steam, and
- conveying of the heated steam from the SP boiler (29) into the bypass boiler (11) for further heating and of the heated steam from the AQC boiler (30) into the tertiary air boiler (20) for further heating, or conveying of the heated steam from the SP boiler (29) into the tertiary air boiler (20) and of the heated steam from the AQC boiler (30) into the bypass boiler (11).

2. Method according to Claim 1,
**characterized by**
separation and removal of dust from the process gas in the bypass boiler (11), where the dust which has been separated off is preferably introduced into a rotary furnace inlet chamber (6) arranged at the inlet, in the flow direction of material, of the rotary tube furnace (7) or into a cement mill for comminution with subsequent recirculation into the cement production process.

3. Method according to either of Claims 1 and 2,
**characterized by**
- regulation of the amount of the tertiary air taken off from the tertiary air conduit (9) by means of a control unit (26) arranged upstream of the tertiary air boiler (20) in the flow direction of gas, and
- regulation of the amount of the process gas taken off at the process gas offtake (10a) at the outlet of the calciner (5) and/or at the process gas offtake (10b) at the gas-side outlet of the first cyclone (1b) in the flow direction of gas in the heat exchanger (1) and/or at the process gas offtake (10c) at the rotary furnace inlet chamber (6), where the control device (27) is a gas regulator which is arranged between the bypass boiler (11) and the heat exchanger (1) in the process gas conduit (13) conveying the gas stream.

4. Plant for producing cement,
having
- at least one heat exchanger (1) consisting of a sequence of cyclones (1a, 1b, 2, 3) for heating raw meal, at least one calciner (4, 5) for deacidifying the raw meal, at least one rotary tube furnace (7) for sintering the deacidified raw meal to form cement clinker having a rotary furnace inlet chamber (6), at least one clinker cooler (8) for cooling the cement clinker and at least one tertiary air conduit (9) for discharging heated cooler air (tertiary air) from the clinker cooler (8) into the at least one calciner (4),
- a process gas offtake (10a) at the outlet of the calciner (5) and/or a process gas offtake (10b) at the gas-side outlet of the first cyclone (1b) in the flow direction of gas in the heat exchanger (1) and/or a process gas offtake (10c) at the rotary furnace inlet chamber (6), where
- the process gas offtake (10a, 10b, 10c) is connected by means of a first process gas conduit (12) to a first steam boiler, the bypass boiler (11), for heat exchange and for heating of steam for the purpose of a subsequent conversion of heat into electric energy, and
- a process gas recirculation point (14a, 14b) directly before, in the flow direction of gas, the second or third cyclone (1a, 2) of the heat exchanger (1), where
- the bypass boiler (11) is connected to the process gas recirculation point (14a, 14b) by a second process gas conduit (13),
**characterized in that**
- a second steam boiler, the tertiary air boiler (20), for heat exchange and for heating of steam by tertiary air taken from the tertiary air conduit (9) is provided, where
- a tertiary air offtake (21) arranged upstream, in the flow direction of gas, of the tertiary air boiler (20) in the tertiary air conduit (9) is connected to the tertiary air boiler (20) by a first tertiary air gas conduit (22) and a tertiary air recirculation point (24) arranged downstream, in the flow direction of gas, of the tertiary air boiler (20) in the tertiary air conduit (9) is connected to the tertiary air boiler (20) by a second tertiary air gas conduit (23), and **in that**
- a steam conduit (25) for feeding the heated steam from the tertiary air boiler (20) to the bypass boiler (11) for further heating is provided,
- a steam boiler, the suspension preheater boiler (SP boiler) (29), located downstream, in the flow direction of gas, of the cyclone heat exchanger (1) is provided for heat exchange and for heating of steam by the hot exhaust gas from the cyclone heat exchanger (1), and **in that**
- a steam boiler, the air quenched clinker cooler boiler (AQC boiler) (30), located downstream of the clinker cooler is provided for heat exchange and for heating of steam by the hot exhaust air taken off from the zone located, in the flow direction of material, at the end of the clinker cooler (8), where
- the SP boiler (29) is connected to the bypass boiler (11) by a steam conduit for conveying the heated steam from the SP boiler and the AQC boiler (30) is connected to the tertiary air boiler (20) by a steam conduit for conveying the heated steam from the AQC boiler (30), or the SP boiler (29) is connected to the tertiary air boiler (20) by a steam conduit and the AQC boiler (30) is connected to the bypass boiler (11) by a steam conduit.

5. Plant according to Claim 4,
**characterized in that**
- a first regulating device for regulating the amount of the tertiary air taken off from the tertiary air conduit (9) is present, where the control device is a control unit (26) arranged upstream of the tertiary air boiler (20) in the flow direction of gas, and
- a second regulating device for regulating the amount of the process gas taken off at the process gas offtake (10a) at the outlet of the calciner (5) and/or at the process gas offtake (10b) at the gas-side outlet of the first cyclone (1b) in the flow direction of gas in the heat exchanger (1) and/or at the process gas offtake (10c) at the rotary furnace inlet chamber (6) is present, where the control device (27) is a gas regulator which is arranged between the bypass boiler (11) and the heat exchanger (1) in the process gas conduit (13) conveying the gas stream.

## Revendications

1. Procédé d'utilisation de la chaleur perdue d'une installation de production de ciment,
- dans lequel l'installation de production de ciment présente au moins un échangeur de chaleur (1) constitué d'une succession de cyclones (1a, 1b, 2, 3) pour le chauffage de farine crue, au moins un calcinateur (4, 5) pour la désacidification de la farine crue, au moins un four tubulaire tournant (7) pour l'agglomération de la farine crue désacidifiée en clinker de ciment avec une chambre d'entrée de four tournant (6), au moins un refroidisseur de clinker (8) pour le refroidissement du clinker de ciment et au moins une conduite d'air tertiaire (9) pour l'évacuation d'air de refroidissement chauffé (air tertiaire) du refroidisseur de clinker (8) dans ledit au moins un calcinateur (4), et
- dans lequel
on prélève du gaz de traitement à un point de prélèvement de gaz de traitement (10a) à la sortie du calcinateur (5) et/ou à un point de prélèvement de gaz de traitement (10b) à la sortie côté gaz du premier cyclone (1b) dans la direction d'écoulement du gaz dans l'échangeur de chaleur (1) et/ou à un point de prélèvement de gaz de traitement (10c) à la chambre d'entrée de four tournant (6),
on envoie du gaz de traitement à une première chaudière à vapeur, la chaudière de dérivation (11), pour l'échange de chaleur et pour le chauffage de vapeur d'eau en vue d'une conversion ultérieure de chaleur en énergie électrique, et
on le renvoie ensuite dans le deuxième ou troisième cyclone (1a, 2) dans la direction d'écoulement de gaz de l'échangeur de chaleur (1),
**caractérisé par** les opérations suivantes:
- prélever de l'air tertiaire chaud hors de la conduite d'air tertiaire (9) et envoyer l'air tertiaire dans une deuxième chaudière à vapeur, la chaudière à air tertiaire (20), pour l'échange de chaleur et pour le chauffage de vapeur d'eau,
- envoyer la vapeur d'eau chauffée de la chaudière à air tertiaire (20) à la chaudière de dérivation (11) pour un chauffage complémentaire,
- renvoyer la part de l'air tertiaire, qui a traversé la chaudière à air tertiaire (20), dans la conduite d'air tertiaire (9) en un point de renvoi d'air tertiaire (24) entre la chaudière à air tertiaire (20) et le calcinateur (4, 5),
- conduire les gaz d'échappement chauds de l'échangeur de chaleur à cyclones (1) à travers une chaudière à vapeur, la chaudière de préchauffage à suspension (SP-Boiler) (29), installée après l'échangeur de chaleur à cyclones (1) dans la direction d'écoulement du gaz pour l'échange de chaleur et pour le chauffage de vapeur d'eau,
- conduire l'air vicié chaud provenant de la zone du refroidisseur de clinker (8) se trouvant à la fin dans la direction d'écoulement des matières, à travers une chaudière à vapeur, la chaudière de refroidissement de clinker refroidie à l'air (AQC-Boiler) (30), pour l'échange de chaleur et pour le chauffage de vapeur d'eau, et
- conduire la vapeur d'eau chauffée provenant du SP-Boiler (29) pour le chauffage complémentaire dans la chaudière de dérivation (11) et la vapeur d'eau chauffée provenant du AQC-Boiler (30) pour le chauffage complémentaire dans la chaudière à air tertiaire (20), ou conduire la vapeur d'eau chauffée provenant du SP-Boiler (29) dans la chaudière à air tertiaire (20) et la vapeur d'eau chauffée provenant du AQC-Boiler (30) dans la chaudière de dérivation( 11).

2. Procédé selon la revendication 1, **caractérisé par** l'opération suivante:
séparer et éliminer des parts de poussières hors du gaz de traitement dans la chaudière de dérivation (11), dans lequel la poussière séparée est amenée de préférence dans une chambre d'entrée de four tournant (6) disposée à l'entrée du four tournant (7) dans la direction d'écoulement des matières ou dans un broyeur à ciment pour le broyage avec renvoi ultérieur dans le processus de fabrication de ciment.

3. Procédé selon une des revendications 1 ou 2, **caractérisé par** les opérations suivantes:
- réguler le débit de l'air tertiaire prélevé hors de la conduite d'air tertiaire (9) par un organe de réglage (26) disposé avant la chaudière à air tertiaire (20) dans la direction d'écoulement du gaz, et
- réguler le débit du gaz de traitement prélevé au point de prélèvement de gaz de traitement (10a) à la sortie du calcinateur (5) et/ou au point de prélèvement de gaz de traitement (10b) à la sortie côté gaz du premier cyclone (1b) dans la direction d'écoulement du gaz dans l'échangeur de chaleur (1) et/ou au point de prélèvement de gaz de traitement (10c) à la chambre d'entrée de four tournant (6), dans lequel l'élément de réglage (27) est un régulateur de gaz, qui est disposé entre la chaudière de dérivation (11) et l'échangeur de chaleur (1) dans la conduite de gaz de traitement (13) transportant le courant de gaz.

4. Installation de production de ciment, présentant
- au moins un échangeur de chaleur (1) constitué d'une succession de cyclones (1a, 1b, 2, 3) pour le chauffage de farine crue, au moins un calcinateur (4, 5) pour la désacidification de la farine crue, au moins un four tubulaire tournant (7) pour l'agglomération de la farine crue désacidifiée en clinker de ciment avec une chambre d'entrée de four tournant (6), au moins un refroidisseur de clinker (8) pour le refroidissement du clinker de ciment et au moins une conduite d'air tertiaire (9) pour l'évacuation d'air de refroidissement chauffé (air tertiaire) du refroidisseur de clinker (8) dans ledit au moins un calcinateur (4),
- un point de prélèvement de gaz de traitement (10a) à la sortie du calcinateur (5) et/ou un point de prélèvement de gaz de traitement (10b) à la sortie côté gaz du premier cyclone (1b) dans la direction d'écoulement du gaz dans l'échangeur de chaleur (1) et/ou un point de prélèvement de gaz de traitement (10c) à la chambre d'entrée de four tournant (6), dans laquelle
- le point de prélèvement de gaz de traitement (10a, 10b 10c) est relié par une première conduite de gaz de traitement (12) à une première chaudière à vapeur, la chaudière de dérivation (11), pour l'échange de chaleur et pour le chauffage de vapeur d'eau en vue d'une conversion ultérieure de chaleur en énergie électrique, et
- un point de renvoi de gaz de traitement (14a, 14b) placé dans la direction d'écoulement du gaz directement avant le deuxième ou le troisième cyclone (1a, 2) de l'échangeur de chaleur (1), dans laquelle
- la chaudière de dérivation (11) est reliée au point de renvoi de gaz de traitement (14a, 14b) par une deuxième conduite de gaz de traitement (13), **caractérisée en ce que**
- il est prévu une deuxième chaudière à vapeur, la chaudière à air tertiaire (20), pour l'échange de chaleur et pour le chauffage de vapeur d'eau par l'air tertiaire prélevé dans la conduite d'air tertiaire (9), dans laquelle
- un point de prélèvement d'air tertiaire (21) disposé dans la direction d'écoulement du gaz avant la chaudière à air tertiaire (20) dans la conduite d'air tertiaire (9) est en liaison avec la chaudière à air tertiaire (20) par une première conduite de gaz d'air tertiaire (22) et un point de renvoi d'air tertiaire (24) disposé dans la direction d'écoulement du gaz après la chaudière à air tertiaire (20) dans la conduite d'air tertiaire (9) est en liaison avec la chaudière à air tertiaire (20) par une deuxième conduite de gaz d'air tertiaire (23), et
- il est prévu une conduite de vapeur (25) pour la fourniture de la vapeur d'eau chauffée provenant de la chaudière à air tertiaire (20) à la chaudière de dérivation (11) pour un chauffage complémentaire,
- il est prévu une chaudière à vapeur installée après l'échangeur de chaleur à cyclones (1) dans la direction d'écoulement du gaz, la chaudière de préchauffage à suspension (SP-Boiler) (29), pour l'échange de chaleur et pour le chauffage de vapeur d'eau par les gaz d'échappement chauds provenant de l'échangeur de chaleur à cyclones (1), et
- il est prévu une chaudière à vapeur installée après le refroidisseur de clinker, la chaudière de refroidisseur de clinker refroidie à l'air (AQC-Boiler) (30), pour l'échange de chaleur et pour le chauffage de vapeur d'eau par l'air vicié chaud prélevé dans la zone du refroidisseur de clinker (8) se trouvant à la fin dans la direction d'écoulement des matières, dans laquelle
- le SP-Boiler (29) est relié à la chaudière de dérivation (11) par une conduite de vapeur pour conduire la vapeur d'eau chauffée hors du SP-Boiler et le AQC-Boiler (30) est relié à la chaudière à air tertiaire (20) par une conduite de vapeur pour conduire la vapeur d'eau chauffée hors du AQC-Boiler (30), ou le SP-Boiler (29) est relié par une conduite de vapeur à la chaudière à air tertiaire (20) et le AQC-Boiler (30) est relié par une conduite de vapeur à la chaudière de dérivation (11) .

5. Installation selon la revendication 4, **caractérisée en ce que**
- il se trouve un premier dispositif de réglage pour la régulation du débit de l'air tertiaire prélevé hors de la conduite d'air tertiaire (9), dans laquelle l'élément de réglage est un organe de réglage (26) disposé avant la chaudière à air tertiaire (20) dans la direction d'écoulement du gaz, et
- il se trouve un deuxième dispositif de réglage pour la régulation du débit du gaz de traitement prélevé au point de prélèvement de gaz de traitement (10a) à la sortie du calcinateur (5) et/ou au point de prélèvement de gaz de traitement (10b) à la sortie côté gaz du premier cyclone (1b) dans la direction d'écoulement du gaz dans l'échangeur de chaleur (1) et/ou au point de prélèvement de gaz de traitement (10c) à la chambre d'entrée de four tournant (6), dans laquelle l'élément de réglage (27) est un régulateur de gaz, qui est disposé entre la chaudière de dérivation (11) et l'échangeur de chaleur (1) dans la conduite de gaz de traitement (13) transportant le courant de gaz.
